# EUROPÄISCHE PATENTANMELDUNG

(11) **EP 1 346 955 A2**
(43) Veröffentlichungstag der Anmeldung: **24.09.2003**
(21) Anmeldenummer: 03002770.0
(22) Anmeldetag: 07.02.2003
(51) Int. Cl.: C02F 3/12, B01F 3/04

(54) **Tauchbelüfter für Kläranlagen**

(30) Priorität: 16.03.2002 DE 20204231 U
(71) Anmelder: Baumann, Markus, 32602 Vlotho (DE)
(72) Erfinder: Baumann, Markus, 32602 Vlotho (DE)
(74) Vertreter: TER MEER STEINMEISTER & PARTNER GbR

(57) **Zusammenfassung**

Ein Tauchbelüfter für Kläranlagen ist versehen mit einem nach unten gerichtetem Pumpenauslaß und einem Pumpeneinlaß, der mit einem Luftschlauch verbunden ist. Der Pumpeneinlaß (14) liegt unterhalb des Wasserspiegels (18) im Klärbecken. Der Luftschlauch (16), ausgehend von dem Pumpeneinlaß (14), verläuft mit einem vorgegebenen Volumen unterhalb des Wasserspiegels. Auf diese Weise wird erreicht, daß beim Anlaufen der Pumpe zunächst Wasser und erst später Luft abgegeben wird. Dadurch werden kurze Rückstöße ohne Lufteintrag möglich.

## Beschreibung

Die Erfindung betrifft einen Tauchbelüfter für Kläranlagen mit nach unten gerichtetem Pumpenauslaß und einem Lufteinlaß, der mit einem Luftschlauch verbunden ist.

Derartige Tauchbelüfter üben eine Doppelfunktion aus, indem sie zum einen Luft in ein Klärbecken pumpen und zum anderen durch einen scharfen, nach unten gerichteten Luftstrahl das Klärwasser im Becken in Bewegung bringen, also umrühren. Diese Doppelfunktion hat den Vorteil, daß mechanische Rührgeräte mit Rührflügeln oder dergleichen nicht notwendig sind, hat aber in bestimmten Fällen auch Nachteile. Bei bestimmten Klärverfahren ist es wünschenswert, daß das Klärwasser von Zeit zu Zeit kurz in Bewegung gebracht wird, ohne daß gleichzeitig Luft eingetragen wird. So erfolgt beispielsweise beim Klärvorgang die Denitrifizierung in einer anaeroben Phase, die sich nur unter Sauerstoffmangel einstellt. Auch in diesen Phasen ist es wichtig, das Wasser in Bewegung zu halten und für eine gleichmäßige Durchmischung zu sorgen.

Der Erfindung liegt die Aufgabe zugrunde, einen Tauchbelüfter der eingangs genannten Art so auszubilden, daß er auch eine Rührfunktion ohne gleichzeitigen Lufteintrag in das Wasser ermöglicht.

Diese Aufgabe wird bei einem Tauchbelüfter der obigen Art dadurch gelöst, daß der Lufteinlaß unterhalb des Wasserspiegels im Klärbecken liegt und daß der Luftschlauch, ausgehend von dem Lufteinlaß, mit einem vorgegebenen Volumen unterhalb des Wasserspiegels verläuft.

Derjenige Teil des Luftschlauches, der sich unterhalb des Wasserspiegels befindet, läuft im Ruhezustand des Tauchbelüfters durch den Tauchbelüfter hindurch voll Wasser. Wenn der Tauchbelüfter jetzt eingeschaltet wird, wird zunächst das im Schlauch enthaltene Wasser aus diesem durch den Tauchbelüfter gesaugt, bevor wieder Luft gepumpt werden kann. Durch gezielte Vergrößerung des Schlauchvolumens, das sich unterhalb des Wasserspiegels befindet, läßt sich daher bestimmen, nach welcher Zeitspanne ab Einschalten des Tauchbelüfters die Belüftungsfunktion einsetzt.

Die Verzögerung der Luftzufuhr läßt sich entweder dadurch erreichen, daß eine vorgegebene Länge des Luftschlauches unter Wasser gehalten wird, oder auch dadurch, daß in den Luftschlauch eine erweiterte Kammer integriert wird. Es ist also möglich, das Einsetzen der Luftzufuhr um einen gewissen Zeitraum zu verzögern, so daß beispielsweise während der anaeroben Klärphase wiederholt kurze Pumpenstöße zum Umrühren des Klärwassers durchgeführt werden können, ohne daß gleichzeitig Luft eingetragen wird.

Im folgenden werden bevorzugte Ausführungsbeispiele der Erfindung anhand der beigefügten Zeichnung näher erläutert.
- Fig. 1: ist eine schematische Darstellung eines Tauchbelüfters in der üblichen Ausführung;
- Fig. 2: ist eine entsprechende Darstellung des Tauchbelüfters nach einer ersten Ausführungsform der Erfindung;
- Fig. 3: bezieht sich auf eine zweite Ausführungsform der Erfindung.

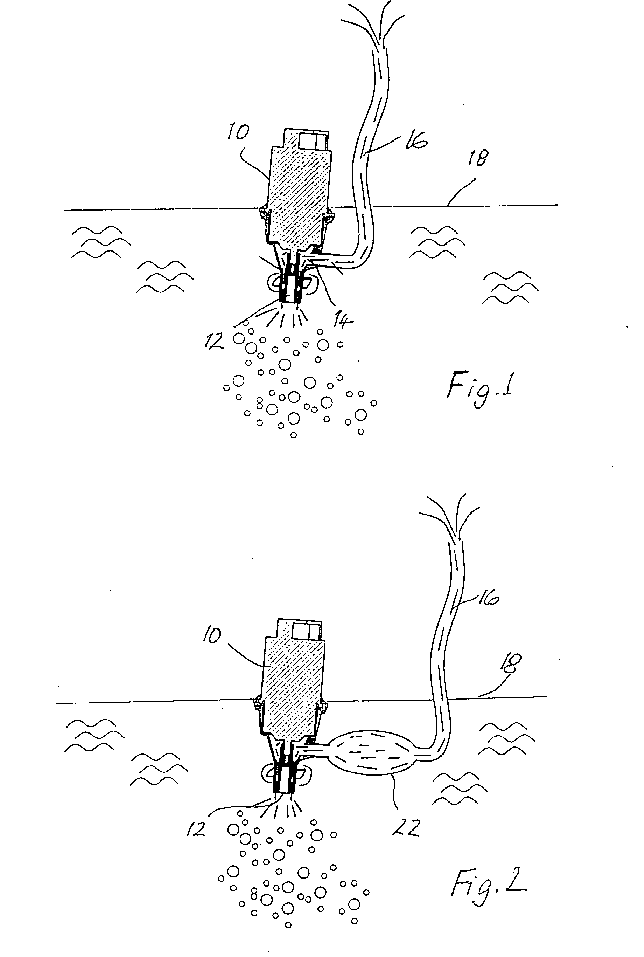

In Fig. 1 ist ein Tauchbelüfter insgesamt mit 10 bezeichnet. Er weist einen unteren Auslaß 12 auf, aus dem bei normalem Betrieb ein kräftiger Luftstrahl nach unten abgegeben wird, der Luft bis zum Boden des Klärbeckens drückt und zugleich einen Rühreffekt auf das Wasser ausübt. Mit einem Einlaß 14 des Tauchbelüfters ist ein Luftschlauch 16 verbunden, der aus einem Bereich oberhalb des Wasserspiegels 18 Luft zuführt. Wenn der Tauchbelüfter 10 abgeschaltet wird, läuft derjenige Teil des Luftschlauches 16, der sich unterhalb des Wasserspiegels 18 befindet, voll Wasser. Bei der üblichen Anordnung gemäß Fig. 1 ist dieses Wasservolumen jedoch so gering, daß nach beispielsweise 0,5 Sekunden bereits Luft aus dem Auslaß 12 austritt. Eine Rührwirkung ohne gleichzeitige Luftzufuhr ist daher praktisch nicht möglich.

Fig. 2 zeigt eine Ausführungsform mit einem Luftschlauch 20, in den eine erweiterte Kammer 22 integriert ist, die sich in einer Position unterhalb des Wasserspiegels 18 befindet.

Diese Kammer nimmt ein vergrößertes Wasservolumen auf, wenn der Tauchbelüfter 10 abgeschaltet wird, so daß zunächst eine längere Laufzeit beim Einschalten des Tauchbelüfters vergeht, bis aus dem Auslaß 12 wiederum Luft austritt. Auf diese Weise sind Pumpenstöße, bei denen nur Wasser durch den Auslaß 12 abgegeben wird, über einen längeren Zeitraum möglich.

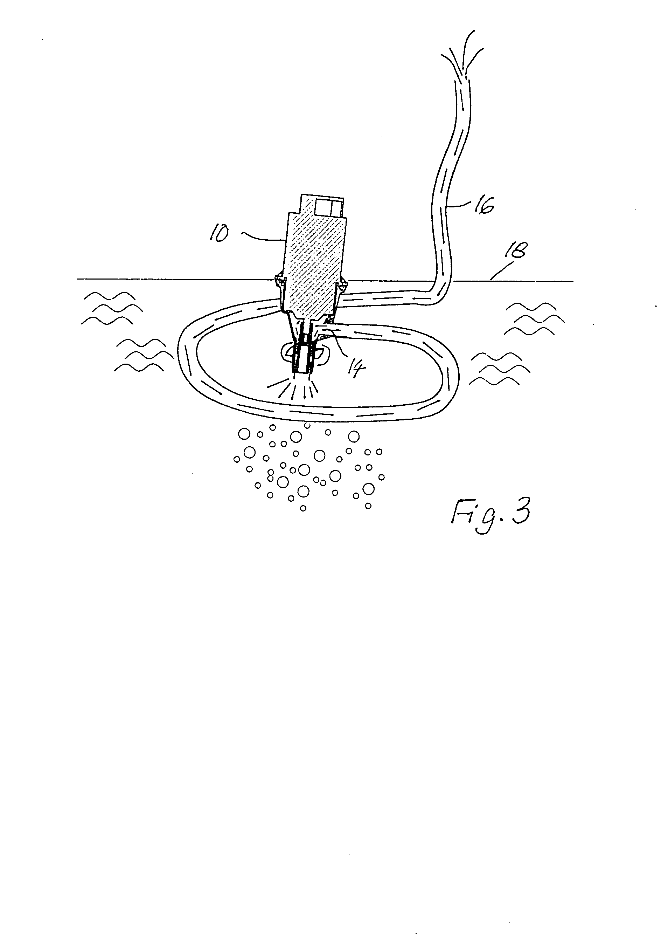

Fig. 3 zeigt eine Ausführungsform mit einem längeren Luftschlauch 24, der über eine größere Länge unterhalb des Wasserspiegels 18 verlegt ist. Hier dient die unterhalb des Wasserspiegels dienende Länge des Luftschlauches 24 als Wasserreservoir, das zunächst bei Beginn des Betriebes des Tauchbelüfters abgepumpt werden muß, bis Luft aus dem Auslaß 12 austritt. Auch hier sind Pumpenstöße ohne Luftzufuhr möglich. Die Ausführungsform gemäß Fig. 3 hat den Vorteil, daß die Länge des unterhalb des Wasserspiegels liegenden Abschnitts des Luftschlauches 24 in einfacher Weise variiert werden kann. Es ist aber auch möglich, eine Kammer 22 in ihrer Größe verstellbar auszubilden, etwa in der Form eines Zylinders mit einem verstellbaren Kolben, der eine Kammer unterschiedlicher Größe innerhalb des Zylinders begrenzt. In jedem Falle läßt sich erreichen, daß die Rührfunktion zumindest über eine gewisse Zeit ohne gleichzeitige Luftzufuhr ausgeübt werden kann.

## Patentansprüche

1. Tauchbelüfter für Kläranlagen mit nach unten gerichtetem Pumpenauslaß und einem Pumpeneinlaß, der mit einem Luftschlauch verbunden ist, **dadurch gekennzeichnet, daß** der Pumpeneinlaß (14) unterhalb des Wasserspiegels (18) im Klärbecken liegt und daß der Luftschlauch (20,24), ausgehend von dem Pumpeneinlaß (14), mit einem vorgegebenen Volumen unterhalb des Wasserspiegels verläuft.

2. Tauchbelüfter nach Anspruch 1, **dadurch gekennzeichnet, daß** der Luftschlauch (24) gegenüber der notwendigen Mindestlänge zum Anschließen an den Pumpeneinlaß (14) unterhalb des Wasserspiegels (18) verlängert ist.

3. Tauchbelüfter nach Anspruch 1, **dadurch gekennzeichnet, daß** in den Luftschlauch (20) eine erweiterte Kammer (22) integriert ist.
